# EUROPEAN PATENT APPLICATION

(11) **EP 4 760 503 A1**
(43) Date of publication of application: **17.06.2026**
(21) Application number: 24887504.9
(22) Date of filing: 02.08.2024
(51) Int. Cl.: G06F 9/455

(54) **HANDLING METHOD FOR VIRTUAL-MACHINE CRASH EVENT, AND DEVICE AND STORAGE MEDIUM**

(30) Priority: 07.11.2023 CN 202311479735
(71) Applicant: Honor Device Co., Ltd., Shenzhen, Guangdong 518040 (CN)
(72) Inventor: ZHOU, Yunpeng, Shenzhen, Guangdong 518040 (CN); CHENG, Xuetao, Shenzhen, Guangdong 518040 (CN); MA, Zhansong, Shenzhen, Guangdong 518040 (CN)
(74) Representative: MERH-IP Matias Erny Reichl Hoffmann Patentanwälte PartG mbB
(86) International application number: PCT/CN2024/109529
(87) International publication number: WO 2025/097882

(57) **Abstract**

This application provides a method for processing a crash event of a virtual machine, a device, and a storage medium. In the method, when a crash event occurs in a second virtual machine oriented to a hardware layer of an electronic device, a first virtual machine that has not experienced a crash event and carries an operating system temporarily takes over a resource occupied by the second virtual machine, and restarts the second virtual machine separately. After the second virtual machine is restarted, the resource of the second virtual machine that is taken over by the first virtual machine is returned to the second virtual machine. In this way, self-recovery is performed only on the second virtual machine in which the crash event occurs, and an overall restart of the electronic device is not triggered, thereby reducing user perception and improving user experience.

## Description

This application claims priority to Chinese Patent Application No. 202311479735.2, filed with the China National Intellectual Property Administration on November 7, 2023 and entitled "METHOD FOR PROCESSING CRASH EVENT OF VIRTUAL MACHINE, DEVICE, AND STORAGE MEDIUM", which is incorporated herein by reference in its entirety.

### TECHNICAL FIELD

This application relates to the field of virtualization technologies, and in particular, to a method for processing a crash event of a virtual machine, a device, and a storage medium.

### BACKGROUND

As virtualization technologies are increasingly widely used, an architecture of a virtual machine is abundantly used in a system on chip (System on Chip, SOC) architecture adopted in an electronic device currently. Therefore, not only a service scenario can be isolated, but also decoupling is facilitated. However, the virtual machine may crash, resulting in an overall exception of the electronic device.

Currently, for processing of a crash event of the virtual machine, the electronic device is usually recovered to normal use in a manner of compulsively performing an overall restart. However, in this manner of compulsively performing an overall restart, a black screen occurs in the electronic device, a startup screen is flashed again, and then an operating system is entered and a desktop is displayed. This not only causes slow processing, but also affects user experience.

### SUMMARY

To resolve the foregoing technical problem, this application provides a method for processing a crash event of a virtual machine, a device, and a storage medium, to help, when a crash event occurs in a hardware layer virtual machine, the virtual machine that has not experienced a crash event and carries an operating system assist the virtual machine in which the crash event occurs to recover to normal, and does not trigger an overall restart, thereby reducing user perception and improving user experience.

According to a first aspect, this application provides a method for processing a crash event of a virtual machine, which is applied to an electronic device. A first virtual machine and a second virtual machine run on the electronic device. The first virtual machine is a virtual machine that carries an operating system of the electronic device. The second virtual machine is a virtual machine oriented to a hardware layer of the electronic device. The method includes: releasing, in response to a crash event occurring in the second virtual machine, a first resource occupied by the second virtual machine, and taking over, by the first virtual machine, the first resource; reallocating a memory resource to the second virtual machine, and restarting the second virtual machine; releasing the first resource taken over by the first virtual machine after the second virtual machine is successfully restarted; and reestablishing a service link between the second virtual machine and a service for which the second virtual machine is responsible after the second virtual machine obtains the first resource, and restoring a capability of processing the service.

Through an example in which the operating system of the electronic device is an Android system, the first virtual machine is a virtual machine that carries the Android system. In some implementations, the first virtual machine may be referred to as a primary virtual machine (primary virtual machine, PVM), which may be responsible for most of service processing logic of the Android system.

In some implementations, the second virtual machine oriented to the hardware layer may be described as a hardware layer virtual machine, for example, a hardware layer virtual machine A listed in this application, which is responsible for processing services such as fingerprint recognition, facial recognition, and gesture recognition; for another example, a hardware layer virtual machine B listed in this application, which is responsible for services such as electronic identity recognition and mobile POS (Point of sales); and for another example, a hardware layer virtual machine C listed in this application, which is responsible for reliability of a central processing unit (Central Processing Unit, CPU) system of an electronic device.

The crash event occurring in the second virtual machine is specifically a crash (crash/quit) problem commonly seen in Android.

The operations of sensing the crash event occurring in the second virtual machine, instructing the second virtual machine to release the first resource, taking over the first resource by the first virtual machine, reallocating the memory resource to the second virtual machine and triggering the second virtual machine to restart may be implemented by a virtual machine management service (Hyper-V).

The virtual machine management service is a tool that may be used for creating a virtual machine, closing a virtual machine, starting a virtual machine, and performing a migration operation on a virtual machine.

Therefore, when the crash event occurs in the second virtual machine, the first virtual machine that has not experienced the crash event and carries the operating system temporarily takes over a resource occupied by the second virtual machine, and restarts the second virtual machine separately. After the second virtual machine is restarted, the resource of the second virtual machine that is taken over by the first virtual machine is returned to the second virtual machine. In this way, self-recovery is performed only on the second virtual machine in which the crash event occurs, and an overall restart of the electronic device is not triggered, thereby reducing user perception and improving user experience.

According to a first aspect, the releasing a first resource occupied by the second virtual machine includes: disabling an input/output IO resource and an interrupt resource of a first driver, where the first driver is a driver to be invoked by the second virtual machine when the service is processed; and clearing content in a queue corresponding to the IO resource and the interrupt resource.

The first driver is related to the second virtual machine in which the crash occurs.

In an example, when the second virtual machine in which the crash occurs is a virtual machine responsible for processing services such as fingerprint recognition, facial recognition, and gesture recognition, the first driver may include a touch (touch) driver, a display (display) driver, a camera (camera) driver, and the like.

Therefore, when the second virtual machine crashes, the IO resource and the interrupt resource of each driver invoked by the second virtual machine are disabled, and the content in the queue corresponding to the IO resource and the interrupt resource are cleared, so as to release the first resource occupied by the second virtual machine, thereby avoiding memory leakage. Consequently, performance of another virtual machine in which the crash event does not occur is reduced, and the crash event even occurs.

According to a first aspect or any implementation of the foregoing first aspect, the clearing content in a queue corresponding to the IO resource and the interrupt resource includes: clearing an event in a first input first output queue corresponding to the IO resource and the interrupt resource; and clearing a message in a message queue corresponding to the IO resource and the interrupt resource.

Therefore, various resources occupied by the second virtual machine are released.

According to a first aspect or any implementation of the foregoing first aspect, after the clearing content in a queue corresponding to the IO resource and the interrupt resource, the method further includes: reclaiming the memory resource occupied by the second virtual machine.

Therefore, the memory resource occupied by the second virtual machine is reclaimed, to relieve the memory pressure, thereby ensuring normal running of another virtual machine or program and normal processing of the service.

According to a first aspect or any implementation of the foregoing first aspect, the method further includes: The first virtual machine takes over the reclaimed memory resource.

According to a first aspect or any implementation of the foregoing first aspect, the reallocating a memory resource to the second virtual machine, and restarting the second virtual machine includes: reallocating the memory resource to the second virtual machine, and reestablishing a mapping between the second virtual machine and the memory resource; invoking a second driver to load an image of the second virtual machine; and restarting the operating system running on the second virtual machine.

Therefore, the second virtual machine in which the crash occurs is restarted.

According to a first aspect or any implementation of the foregoing first aspect, in response to the crash event occurring in the second virtual machine, the method further includes: obtaining data in the memory resource corresponding to the second virtual machine, and dumping the data to a storage medium of the electronic device.

When the second virtual machine crashes, the obtained data in the memory resource corresponding to the second virtual machine is dynamic or volatile data. In other words, the data is data that is discarded after being used or an exception occurs.

Dump is dump. Specifically, the dynamic data in the memory resource is dumped into a static form. For example, the data is dumped into a file (hereinafter referred to as a dump file), and then is stored into the storage medium of the electronic device.

The storage medium may be an internal memory of the electronic device, or may be a connected external memory.

Therefore, when the second virtual machine crashes, data related to the second virtual machine is collected and dumped, so as to facilitate locating a problem in a later period based on the dump file in the storage medium.

According to a first aspect or any implementation of the foregoing first aspect, the method further includes: configuring a monitor for the first virtual machine and the second virtual machine during creation of the first virtual machine and the second virtual machine; collecting system event information of the first virtual machine and the second virtual machine through the monitor, where the system event information includes an event type; and performing the step of responding to the crash event occurring in the second virtual machine when the event type indicates that a system event currently occurring in the second virtual machine is the crash event.

The first virtual machine and the second virtual machine are created, for example, through the virtual machine management service (Hyper-V).

Configuration of the monitor, interaction with the created first virtual machine and second virtual machine, and further obtaining the system event information collected by monitor to determine whether the crash event occurs are all implemented by the virtual machine management service.

According to a first aspect or any implementation of the foregoing first aspect, the method further includes: performing, when the event type indicates that a system event currently occurring in the first virtual machine is a crash event, an overall restart on the electronic device in response to the crash event occurring in the first virtual machine.

The overall restart specifically refers to a restart of an operating system level, that is, a restart manner in which the operating system is directly restarted or a system kernel is reloaded without repowering. Because the operating system needs to be restarted or the system kernel needs to be reloaded, a black screen occurs, followed by a display of a restart animation and a process of entering the operating system.

According to a first aspect or any implementation of the foregoing first aspect, the performing, when the event type indicates that a system event currently occurring in the first virtual machine is a crash event, an overall restart on the electronic device in response to the crash event occurring in the first virtual machine includes: performing an overall restart on the electronic device in response to the crash event occurring in the first virtual machine when the crash event is a panic exception.

The panic is an error processing manner, and is used to indicate that an error that cannot be processed occurs, resulting in that a program cannot be continuously executed. Generation of the panic may cause a program to be forced to stop running, and a developer needs to process the panic effectively. Otherwise, the program may crash and affect a normal service process.

The first virtual machine carries most of service logic of the Android system. Therefore, to ensure normal use of the Android system, the overall restart needs to be performed to recover normal when the panic occurs in the first virtual machine. For an exception of another type, for example, an exception of a Bluetooth or a cellular network function, the exception can be recovered by restarting the function, and the overall restart does not need to be performed.

Therefore, the electronic device is controlled to perform the overall restart only when the panic exception occurs in the first virtual machine, thereby greatly reducing a probability of the overall restart.

According to a second aspect, this application provides an electronic device. The electronic device includes a memory and a processor. The memory is coupled to the processor. The memory stores a program instruction. The program instruction, when executed by the processor, causes the electronic device to execute an instruction of the method in any one of the first aspect or the possible implementations of the first aspect.

The second aspect and any implementation of the second aspect respectively correspond to the first aspect and any implementation of the first aspect. For technical effects of the second aspect and any implementation of the second aspect, reference may be made to the technical effects corresponding to the first aspect and any implementation of the first aspect. Details are not described herein again.

According to a third aspect, this application provides a computer-readable medium, which is configured to store a computer program. The computer program includes an instruction for performing the method of the first aspect or any possible implementation of the first aspect.

The third aspect and any implementation of the third aspect respectively correspond to the first aspect and any implementation of the first aspect. For technical effects of the third aspect and any implementation of the third aspect, reference may be made to the technical effects corresponding to the first aspect and any implementation of the first aspect. Details are not described herein again.

According to a fourth aspect, this application provides a computer program. The computer program includes an instruction for performing the method of the first aspect or any possible implementation of the first aspect.

The fourth aspect and any implementation of the fourth aspect respectively correspond to the first aspect and any implementation of the first aspect. For technical effect of the fourth aspect and any implementation of the fourth aspect, reference may be made to the technical effect corresponding to the first aspect and any implementation of the first aspect. Details are not described herein again.

According to a fifth aspect, this application provides a chip. The chip includes a processing circuit and a transceiver pin. The transceiver pin and the processing circuit communicate with each other through an internal connection path. The processing circuit performs the method in the first aspect or any possible implementation of the first aspect, to control a receive pin to receive a signal and control a transmit pin to transmit a signal.

The fifth aspect and any implementation of the fifth aspect respectively correspond to the first aspect and any implementation of the first aspect. For technical effects of the fifth aspect and any implementation of the fifth aspect, reference may be made to the technical effects corresponding to the first aspect and any implementation of the first aspect. Details are not described herein again.

### BRIEF DESCRIPTION OF DRAWINGS

FIG. 1 is an example schematic diagram of a hardware structure of an electronic device;
FIG. 2 is an example schematic diagram of a software structure of an electronic device;
FIG. 3 is an example schematic diagram of a virtual machine running on a system on chip in an electronic device, a service that each virtual machine is responsible for, and an operation after a crash event occurs;
FIG. 4A and FIG. 4B are example schematic diagrams of interface changes when a crash event occurs in a virtual machine and an overall restart is performed;
FIG. 5 is an example schematic diagram of a virtual machine running on a system on chip in an electronic device, a service that each virtual machine is responsible for, and an operation after a crash event occurs after self-recovery logic of a method for processing a crash event of a virtual machine is deployed according to an embodiment of this application;
FIG. 6 is an example schematic flowchart of a method for processing a crash event of a virtual machine according to an embodiment of this application; and
FIG. 7 is an example schematic flowchart of another method for processing a crash event of a virtual machine according to an embodiment of this application.

### DESCRIPTION OF EMBODIMENTS

The technical solutions in embodiments of this application are clearly and completely described below with reference to the accompanying drawings in embodiments of this application. Apparently, the described embodiments are merely some rather than all embodiments of this application. All other embodiments obtained by a person of ordinary skill in the art based on embodiments of this application without creative efforts fall within the protection scope of this application.

The term "and/or" herein is merely an association relationship describing related objects, which means that there may be three relationships, for example, A and/or B may indicate three cases: A exists alone, A and B exist simultaneously, and B exists alone.

The terms "first", "second", and the like in the specification of embodiments of this application and the claims are used to distinguish between different objects, but are not used to indicate a specific sequence of objects. For example, a first target object and a second target object are used to distinguish between different target objects, but are not used to describe a specific sequence of the target objects.

In embodiments of this application, a word such as "in an example" or "for example" is used to represent giving an example, an illustration, or a description. Any embodiment or design solution described as "in an example" or "for example" in embodiments of this application should not be explained as being more preferred or having more advantages than another embodiment or design solution. Exactly, use of the words such as "in an example" or "for example" is intended to present a concept in a specific manner.

In the description of embodiments of this application, unless otherwise specified, "a plurality of" means two or more. For example, a plurality of processing units mean two or more processing units, and a plurality of systems mean two or more systems.

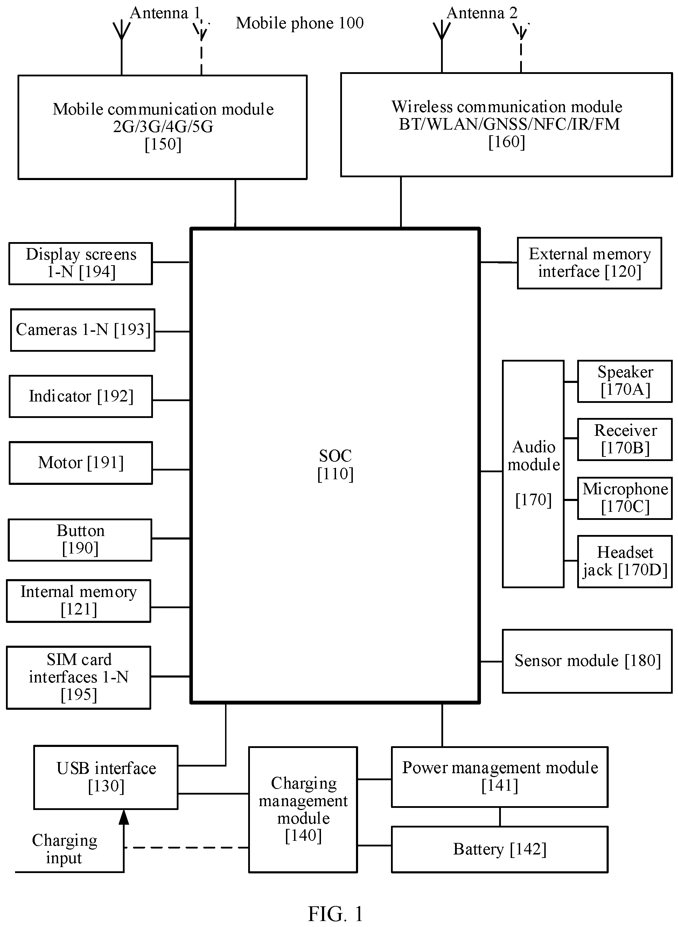

To better understand the technical solutions provided in embodiments of this application, before the technical solutions in embodiments of this application are described, a hardware structure of an electronic device (such as a mobile phone, a tablet computer, or a smart wearable device) applicable to embodiments of this application is first described with reference to the accompanying drawings. For ease of description, a description is provided by using a mobile phone as an example in FIG. 1.

Referring to FIG. 1, a mobile phone 100 may include a system on chip (SOC) 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display screen 194, a subscriber identification module (subscriber identification module, SIM) card interface 195, and the like.

It may be understood that the SOC 110 may also be referred to as a system-level chip, and is a miniature system. In a practical application, the SOC 110 may include one or more processing units. For example, the SOC includes an application processor (application processor, AP), a modem processor (Modem), a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Examples are not listed one by one herein. This is not limited in this application.

For the SOC 110 including the foregoing processing units, in some implementations, different processing units may be independent devices. In other words, each processing unit may be considered as a processor. In some other implementations, different processing units may be integrated into one or more processors.

It should be understood that the foregoing descriptions are merely examples listed for a better understanding of the technical solutions of this embodiment, and are not considered as a unique limitation on this embodiment.

In addition, the SOC 110 may further include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. Examples are not listed one by one herein. This is not limited in this application.

In addition, a memory may be further arranged in the SOC 110, which is configured to store an instruction and data. In some implementations, the memory in the SOC 110 is a cache memory. The memory may store an instruction or data that has just been used or recycled by the SOC 110. In this way, if the SOC 110 needs to use the instruction or the data again, the instruction or the data are directly invoked from the memory. Therefore, repeated access from a storage medium, such as the internal memory 121 and an external memory card, is avoided, a waiting time of the SOC 110 is reduced, and efficiency of the system is improved.

The external memory interface 120 may be configured to connect to the external storage card such as a micro SD card, to extend a storage capability of the mobile phone 100. The external storage card communicates with the SOC 110 through the external memory interface 120, to implement a data storage function.

Specifically, in the technical solution provided in this embodiment of this application, when a crash event occurs in a virtual machine oriented to a hardware layer of the electronic device, a dump file collected and dumped by a virtual machine management service may be stored in the external storage card connected to the external memory interface 120.

The internal memory 121 may be configured to store computer-executable program code. The executable program code includes an instruction. The SOC 110 runs the instruction stored in the internal memory 121, to perform various function applications and data processing of the mobile phone 100. The internal memory 121 may include a program storage area and a data storage area. The program storage area may store an operating system (for example, an Android system), an application program required by at least one function (for example, programs corresponding to fingerprint recognition, gesture recognition, and facial recognition), and the like. The data storage area may store data created during use of the mobile phone 100.

Specifically, in the technical solution provided in this embodiment of this application, when the crash event occurs in the virtual machine oriented to the hardware layer of the electronic device, the dump file collected and dumped by the virtual machine management service may be stored in the data storage area of the internal memory 121.

In addition, the internal memory 121 may include a high-speed random access memory, or may include a non-volatile memory such as at least one magnetic disk storage device, a flash memory device, and a universal flash storage (universal flash storage, UFS).

The charging management module 140 is configured to receive a charging input from a charger. The charger may be a wireless charger, or may be a wired charger. In some implementations of wired charging, the charging management module 140 may receive a charging input of the wired charger through the USB interface 130. In some implementations of wireless charging, the charging management module 140 may receive wireless charging input through a wireless charging coil of the mobile phone 100. The charging management module 140 may further supply power to the electronic device through the power management module 141 while charging the battery 142.

The power management module 141 is configured to be connected to the battery 142, the charging management module 140, and the SOC 110. The power management module 141 receives input from the battery 142 and/or the charging management module 140, and supplies power to the SOC 110, the internal memory 121, the external memory, the display screen 194, the camera 193, the wireless communication module 160, and the like. The power management module 141 may be further configured to monitor parameters such as a battery capacity, battery recycling times, and a battery health status (leakage and impedance). In some other implementations, the power management module 141 may alternatively be arranged in the SOC 110. In some other implementations, the power management module 141 and the charging management module 140 may alternatively be arranged in a same device.

A wireless communication function of the mobile phone 100 may be implemented through the antenna 1, the antenna 2, the mobile communication module 150, the wireless communication module 160, the modem processor, the baseband processor, and the like.

It should be noted that the antenna 1 and the antenna 2 are configured to transmit and receive an electromagnetic wave signal. Each antenna in the mobile phone 100 may be configured to cover one or more communication frequency bands. Different antennas may further be multiplexed to increase a utilization rate of the antennas. For example, the antenna 1 may be multiplexed as a diversity antenna of a wireless local area network. In some other implementations, the antenna may be used in combination with a tuning switch.

The mobile communication module 150 may provide a solution to wireless communication such as 2G/3G/4G/5G applied to the mobile phone 100.

The wireless communication module 160 may provide solutions of wireless communication applied to the mobile phone 100, including a wireless local area network (wireless local area network, WLAN) (such as a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), and an infrared (infrared, IR) technology.

The audio module 170 may include a speaker 170A, a receiver 170B, a microphone 170C, a headset jack 170D, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like. Examples are not listed one by one herein. This is not limited in this application.

The button 190 includes a power button, a volume button, and the like. The button 190 may be a mechanical button. The button may alternatively be a touch button. The mobile phone 100 may receive a button input, and generate a button signal input related to a user setting and function control of the mobile phone 100.

The motor 191 may generate a vibration prompt. The motor 191 may be configured to provide a vibration prompt for an incoming call, or may be configured to provide vibration feedback for touch.

The indicator 192 may be an indicator light, and may be configured to indicate a charging state or a battery change, or may be configured to indicate a message, a missed call, a notification, and the like.

The camera 193 is configured to capture a static image or a video. In some implementations, the mobile phone 100 may include 1 or N cameras 193, N being a positive integer greater than 1.

The display screen 194 is configured to display an image, a video, and the like. The display screen 194 includes a display panel. In some implementations, the mobile phone 100 may include 1 or N display screens 194, N being a positive integer greater than 1.

Introduction to the hardware structure of the mobile phone 100 concludes. It should be understood that the mobile phone 100 shown in FIG. 1 is only an example. During specific implementation, the mobile phone 100 may have more or fewer components than those shown in the figure, or may combine two or more components, or may have a different component configuration. Various components shown in FIG. 1 may be implemented by hardware that includes one or more signal processors and/or application-specific integrated circuits, software, or a combination of hardware and software.

As virtualization technologies are increasingly widely used, a large quantity of virtual machines, for example, virtual machines (for ease of distinguishing, referred to as first virtual machines) carrying an operating system of an electronic device and virtual machines (for ease of distinguishing, referred to as second virtual machines) oriented to a hardware layer, run in an SOC currently used in the electronic device.

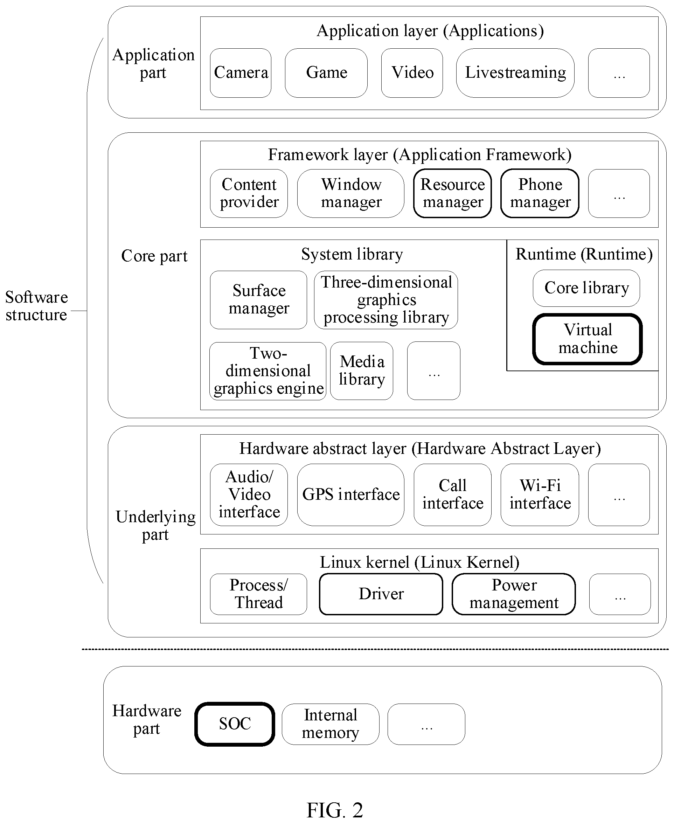

To better understand a software structure of the electronic device of this structure, the electronic device such as the mobile phone is still used as an example, and description is provided with reference to FIG. 2.

Before the software structure of the mobile phone 100 is described, an architecture that may be used by the software system of the mobile phone 100 is first described.

Specifically, in a practical application, the software system of the mobile phone 100 may use a layered architecture, an event-driven architecture, a microkernel architecture, a microservice architecture, or a cloud architecture.

In addition, it may be understood that, a software system currently used by a mainstream electronic device includes but is not limited to a Windows system, an Android system, and an iOS system. For ease of description, in embodiments of this application, an Android system of a layered architecture is used as an example to describe the software structure of the mobile phone 100.

In addition, the following method for processing a crash event of a virtual machine provided in embodiments of this application is also applicable to another system during specific implementation.

FIG. 2 is a block diagram of a software structure of a mobile phone 100 according to an embodiment of this application.

As shown in FIG. 2, a layered architecture of the mobile phone 100 divides software into several layers, each layer having a clear role and responsibility. The layers communicate with each other through a software interface. In some implementations, the Android system is divided into five layers: an application layer (Application Layer, APP layer, also referred to as application layer), an application framework layer (Application Framework Layer, FWK layer, also referred to as framework layer), an Android runtime (Android Runtime) and a system library, a hardware abstract layer (Hardware Abstract Layer, HAL layer), and a kernel layer (Linux Kernel Layer, Linux kernel layer, also referred to as Linux kernel) from top to bottom.

The application layer may include a series of application packages. As shown in FIG. 2, the application packages may include applications such as camera, game, video, live streaming, and the like. Examples are not listed one by one herein. This is not limited in this application.

The application framework layer provides an application programming interface (application programming interface, API) and a programming framework for the application programs in the application layer. In some implementations, these programming interfaces and programming frameworks may be described as functions (may also be described as services or function modules). As shown in FIG. 2, the framework layer may include functions such as a content provider, a window manager, a resource manager, an input manager, a phone manager, and the like. Examples are not listed one by one herein. This is not limited in this application.

The Android runtime includes a core library and a virtual machine. The Android Runtime is responsible for scheduling and managing the Android system.

The core library includes two parts: one part is a performance function that the Java language needs to call, and the other part is a core library of Android.

The application layer and the application framework layer run in the virtual machine. The virtual machine executes java files of the application layer and the application framework layer as binary files. The virtual machine is configured to perform functions such as object life cycle management, stack management, thread management, security and exception management, and garbage collection.

The virtual machines shown in FIG. 2 may be a first virtual machine and a second virtual machine that run in an SOC.

The system library may include a plurality of function modules. For example, a surface manager (surface manager), a media library (media libraries), a three-dimensional (3D) graphics processing library (for example, OpenGL ES), and a two-dimensional (2D) graphics engine (for example, SGL).

The surface manager is configured to manage a display subsystem, and provide fusion of a 2D layer and a 3D layer for a plurality of applications.

The media library supports playback and recording of a plurality of commonly used audio and video formats, static image files, and the like. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, layer processing, and the like.

It may be understood that the foregoing 2D graphics engine is a drawing engine for 2D drawing.

The hardware abstract layer is configured to encapsulate the hardware driver, and then provide a unified interface to an upper-layer framework.

The Linux kernel layer is a layer between hardware and software, and includes various processes and threads, power management, and various hardware drivers, such as a sensor driver, a display driver, a microphone driver, a WLAN driver, and a camera driver.

Introduction to the software structure of the mobile phone 100 concludes. It may be understood that the layers in the software structure shown in FIG. 2 and components included in each layer do not constitute a specific limitation on the mobile phone 100. In some other embodiments of this application, the mobile phone 100 may include more or fewer layers than those shown in the figure, and each layer may include more or fewer components. This is not limited in this application.

For each virtual machine run on the SOC, a group of virtual hardware resources belonging to the virtual machine is configured for the virtual machine. Therefore, functions/logic/services that each virtual machine is responsible for are separated from each other.

In other words, the virtual machines (the first virtual machine and the second virtual machine) run on the SOC, so that a service scenario can be isolated, and decoupling can be facilitated.

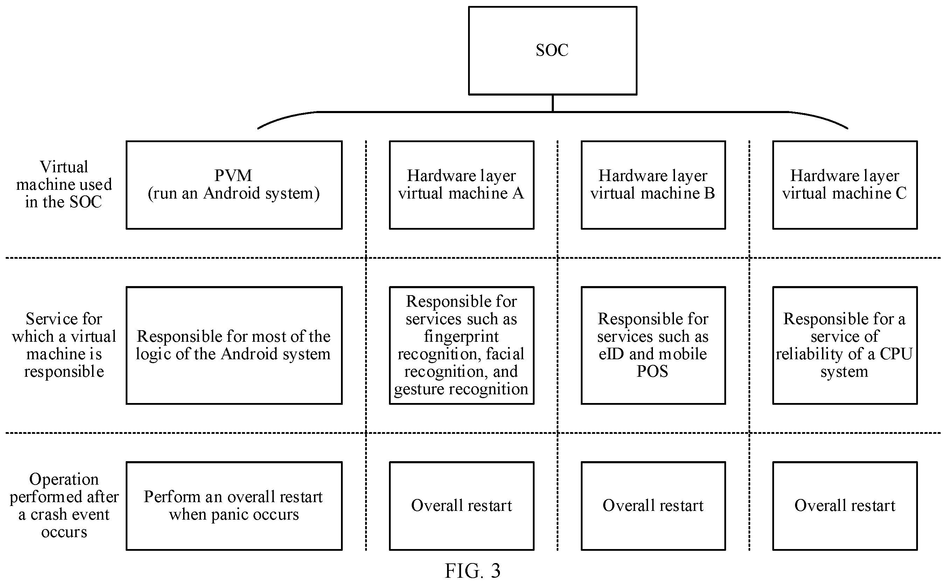

It should be noted that one first virtual machine generally carries most of the service logic of the operating system of the electronic device, such as the Android system. In a possible implementation, the first virtual machine is, for example, a primary virtual machine (PVM), as shown in FIG. 3.

In an example, the PVM mainly runs an Android system. Therefore, the PVM may responsible for most of the logic of the Android system. In an example, the logic include logic from the Linux kernel at the bottom layer to the application layer at the upper layer.

It should be noted that for most of the logic of the Android system for which the PVM is responsible, a program of a function may be restarted alone, to resolve an exception problem occurring in the function. For example, when an exception occurs in a Bluetooth function, normal use of the Bluetooth function may be recovered by turning off the Bluetooth function and then turning the Bluetooth function back on. In other words, the exception can be solved without needing to perform the overall restart on the electronic device. Only when panic occurs, the overall restart needs to be performed.

It may be understood that the panic is an error processing manner, and is used to indicate that an error that cannot be processed occurs, resulting in that a program cannot be continuously executed. For example, when attempting to access a null pointer, the program throws a panic error. Generation of the panic error may cause a program to be forced to stop running. If the panic error is not processed, the program may crash and affect a normal service process.

For the second virtual machines oriented to the hardware layer of the electronic device, the second virtual machines may be divided into a plurality of virtual machines based on functions to be implemented and services that the second virtual machine is responsible for. For ease of description, an example in which 3 second virtual machines are included in the SOC is used. The three second virtual machines may be described as a hardware layer virtual machine A, a hardware layer virtual machine B, and a hardware layer virtual machine C.

Referring to FIG. 3, in an example, the hardware layer virtual machine A may be a virtual machine responsible for recognition services such as fingerprint recognition, facial recognition, and gesture recognition. The hardware layer virtual machine B may be responsible for services such as electronic identity (electronic IDentity, eID) recognition and mobile POS. The hardware layer virtual machine C may be responsible for a service of reliability of a CPU system.

Therefore, the PVM, the hardware layer virtual machine A, the hardware layer virtual machine B, and the hardware layer virtual machine C run in the SOC, so that a service scenario can be isolated, and decoupling can be facilitated.

However, a problem such as a maloperation, insufficient resources, or malicious access may cause a crash (crash) occurs in the virtual machine, which further causes an overall exception of the electronic device and panic.

Currently, for a chip platform providing an SOC, the electronic device is usually recovered to normal use in a manner of compulsively performing an overall restart for processing of a crash event of the virtual machine. As shown in FIG. 3, when a crash event occurring in the PVM is a panic exception/problem, an overall restart is performed on the mobile phone. When any hardware layer virtual machine of the hardware layer virtual machine A, the hardware layer virtual machine B, and the hardware layer virtual machine C crashes, the overall restart is performed on the mobile phone.

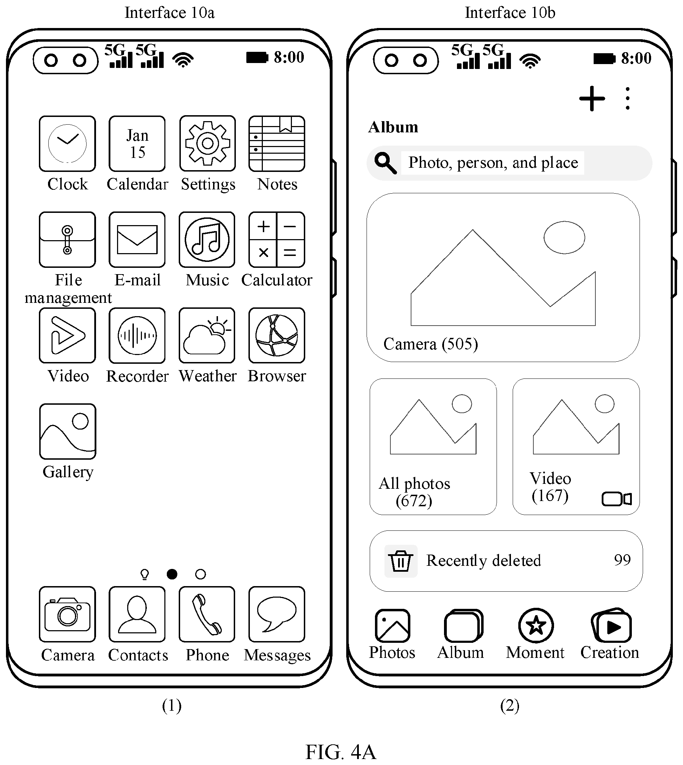

Referring to (1) in FIG. 4A, in an example, in a possible implementation, after a user clicks/taps an icon of a gallery application displayed on an interface 10a, the mobile phone may jump to an interface 10b shown in (2) in FIG. 4A in response to the operation.

In an example, when the user browses a picture displayed on the interface 10b, the mobile phone may cause the crash event to occur in a first virtual machine or a second virtual machine due to insufficient resources or a maloperation of the user. Based on an existing processing policy of a crash event of a virtual machine, the overall restart is directly performed on the mobile phone.

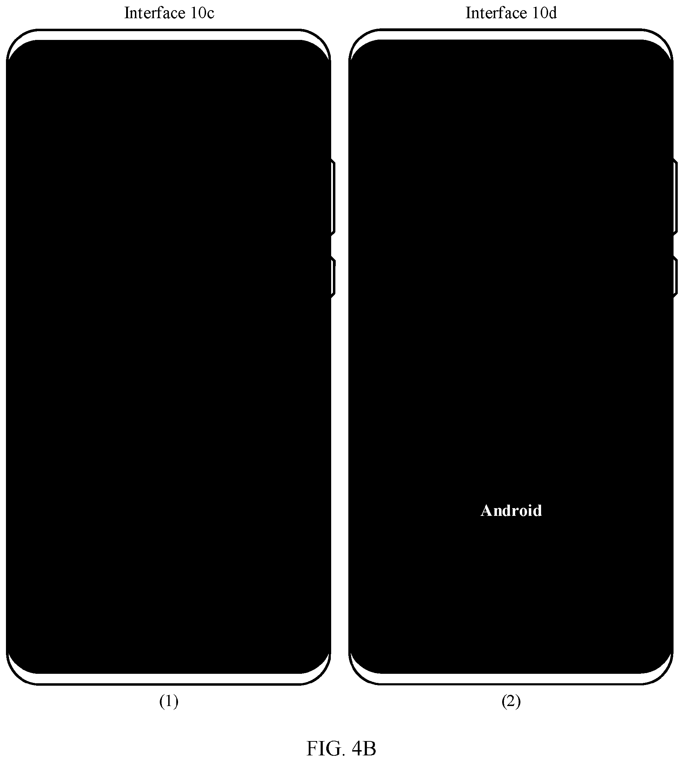

It should be noted that the overall restart in embodiments of this application is specifically a restart at an operating system level of the electronic device, that is, a restart manner in which the operating system is directly restarted or a system kernel is reloaded without repowering. Therefore, after the crash event occurs in the virtual machine, the overall restart is directly performed on the mobile phone. During restart of the operating system or the system kernel, the interface of the mobile phone changes from an interface 10b shown in (2) in FIG. 4A to an interface 10c shown in (1) in FIG. 4B, that is, a black screen. In addition, as time passes by, a corresponding restart screen may further be displayed in the process. In an example, in a possible implementation, the interface of the mobile phone changes from the interface 10c shown in (1) of FIG. 4B to an interface 10d shown in (2) of FIG. 4B. After the operating system of the mobile phone is successfully started, a desktop of the mobile phone, for example, the interface 10a shown in (1) of FIG. 4A, is displayed.

In other words, in a process in which normal use of the electronic device is recovered in a manner of compulsively performing an overall restart, the interface of the electronic device changes from the interface 10b shown in (2) of FIG. 4A, to the interface 10c shown in (1) of FIG. 4B, to the interface 10d shown in (2) in FIG. 4B, and finally to the interface 10a shown in (1) of FIG. 4A.

It should be understood that the foregoing descriptions are merely examples listed for a better understanding of the technical solutions of this embodiment, and are not considered as a unique limitation on this embodiment.

Although this manner of compulsively performing an overall restart may help the virtual machine in which the crash event occurs to recover to normal, the black screen appears on the mobile phone, and the startup screen is flashed again, and then the operating system is entered to display the desktop. Therefore, not only a processing speed is slow, but also user experience is affected.

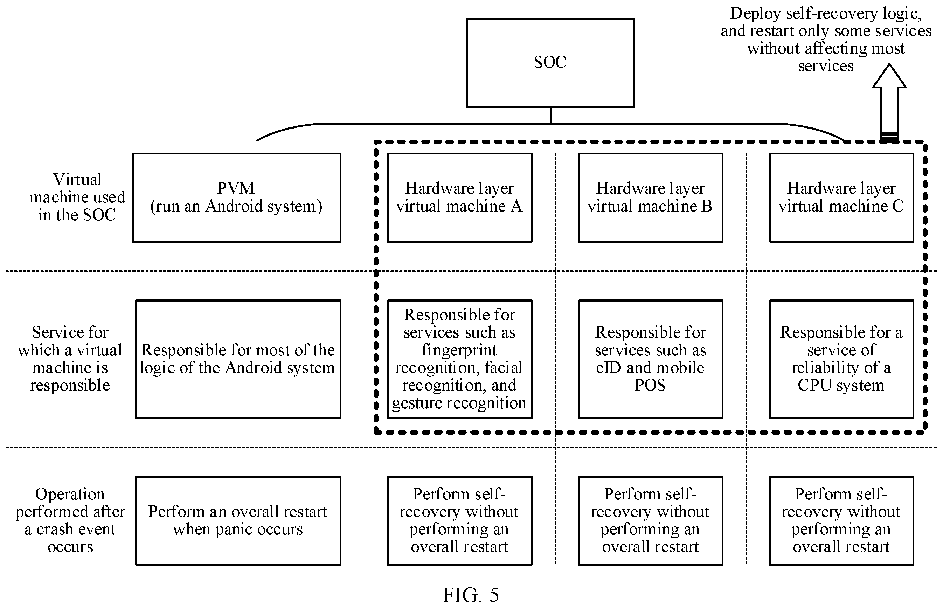

In view of the above, an embodiment of this application provides a method for processing a crash event of a virtual machine, to deploy self-recovery logic for the second virtual machine, as shown in FIG. 5. When the crash event occurs in the second virtual machine, based on the self-recovery logic, the first virtual machine in which the crash event does not occur and carries the operating system assists the second virtual machine in which the crash event occurs to recover to normal. In this way, when most services of the electronic device are not affected, only the virtual machine responsible for some services is restarted, and the overall restart is not triggered to be restarted, thereby reducing user perception and improving user experience.

The foregoing self-recovery logic may be classified into an electronic device (hereinafter referred to as a commercial machine) used for a user and an electronic device (hereinafter referred to as an internal test machine) used for a research and development stage.

Specifically, in consideration of a user privacy problem, the self-recovery logic of the commercial machine may not be related to collection and storage of log information when the crash event occurs. However, for the internal test machine, collection and storage of design log information need to be performed, so that research and development personnel position a problem based on data obtained from a memory when the crash event occurs, thereby resolving the problem.

The following separately describes, with reference to the accompanying drawings, procedures of methods for processing the crash event of the virtual machine based on the self-recovery logic deployed in the two types of electronic devices.

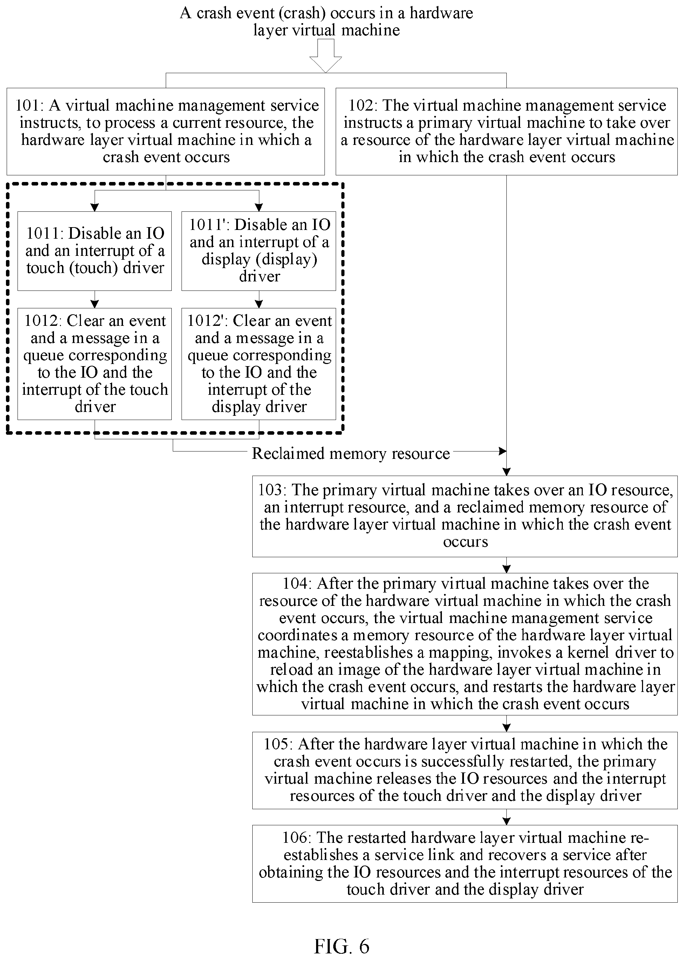

FIG. 6 is an example schematic diagram of a method for processing a crash event of a virtual machine applied to a commercial machine. The method specifically includes the following steps.

101: A virtual machine management service instructs, to process a current resource, the hardware layer virtual machine in which a crash event occurs.

Specifically, the virtual machine management service in this embodiment is Hyper-V. The virtual machine management service may be used for creating a virtual machine, closing a virtual machine, starting a virtual machine, and performing a migration operation on a virtual machine.

In other words, during start of the electronic device, the virtual machine management service creates each virtual machine that may run in an SOC. Specifically, in this embodiment of this application, the virtual machine is a first virtual machine responsible for carrying an operating system, such as an Android system, and each second virtual machine oriented to a hardware layer.

For ease of description, in this embodiment, an example in which the first virtual machine is the primary virtual machine (PVM) shown in FIG. 3 and FIG. 5, and the second virtual machine includes the hardware layer virtual machine A, the hardware layer virtual machine B, and the hardware layer virtual machine C shown in FIG. 3 and FIG. 5 is still used.

In an example, for an SOC of such an architecture, the virtual machine service first creates the PVM, the hardware layer virtual machine A, the hardware layer virtual machine B, and the hardware layer virtual machine C, and configures a monitor for each of the created virtual machines. In this way, during operation of these virtual machines, the virtual machine management service may collect system event information of the PVM, the hardware layer virtual machine A, the hardware layer virtual machine B, and the hardware layer virtual machine C through the configured monitor.

It should be noted that the system event information in this embodiment includes an event type of a currently occurring event. The event type may identify which event the currently occurring system event is.

In addition, the system event information may further carry a source, that is, which virtual machine the source comes from. In this way, the virtual machine in which the crash event occurs can be determined based on an event type in the system event information.

In addition, the virtual machine management service may be used as a manager of the virtual machine, and is responsible for interacting with each virtual machine. Therefore, when determining, through the system event information collected by the monitor, that the hardware layer virtual machine, for example, the hardware layer virtual machine A in which the crash event occurs, the virtual machine management service may interact with the hardware layer virtual machine A in which the crash event occurs. Specifically, the virtual machine management service sends an instruction to the hardware layer virtual machine A, to instruct the hardware layer virtual machine A to release a currently occupied resource. In other words, step 101 is performed.

It should be noted that when the hardware layer virtual machine A is started, some IO resources and interrupt resources of the electronic device are taken over by the hardware layer virtual machine A. Therefore, when the crash event occurs in the hardware layer virtual machine A, the part of resources needs to be released first.

Referring to FIG. 6, in an example, after receiving an instruction that is for releasing an occupied resource sent by the virtual machine management service, the hardware layer virtual machine A disables an IO and an interrupt of a driver that needs to be invoked when the hardware layer virtual machine A processes a service responsible for the hardware layer virtual machine A, and cleans an event and a message in a queue corresponding to the IO and the interrupt of the driver.

It may be learned from FIG. 3 and FIG. 5 that services for which the hardware layer virtual machine A is responsible may include processing services such as fingerprint recognition, facial recognition, and gesture recognition. For ease of description, in this embodiment, an example in which services for which the hardware layer virtual machine A is responsible are specifically the fingerprint recognition service and the gesture recognition service is used.

It may be understood that, when the fingerprint recognition service and the gesture recognition service are implemented, a touch driver and a display driver of the electronic device need to be invoked. Therefore, in this embodiment, the hardware layer virtual machine A needs to disable an IO and an interrupt of the touch (touch) driver (perform step 1011), and clear an event and a message in a queue corresponding to the IO and the interrupt of the touch driver (perform step 1012), disable an IO and an interrupt of the display (display) driver (perform step 1011'), and clear an event and a message in a queue corresponding to the IO and the interrupt of the display driver (perform step 1012').

In an example, in a possible implementation, a queue corresponding to the IO and the interrupt of the touch driver may include a first input first output (First Input First Output, FIFO) queue and a message queue (Message Queue, MSGQ). The queue corresponding to the IO and the interrupt of the display driver may further include the FIFO queue and the MSGQ.

Each FIFO queue may buffer an event that is not processed by the hardware layer virtual machine A, and each MSGQ may buffer a message that is not processed by the hardware layer virtual machine A. Therefore, processing required by the hardware layer virtual machine A may include clearing an event in each FIFO queue and clearing a message in each MSGQ.

It should be understood that the foregoing descriptions are merely examples listed for a better understanding of the technical solutions of this embodiment, and are not considered as a unique limitation on this embodiment.

Still referring to FIG. 6, in an example, after the hardware layer virtual machine A in which the crash event occurs completes releasing the occupied resources, the virtual machine management service reclaims the memory resources occupied by the hardware layer virtual machine A, and delivers the memory resources to the PVM for takeover.

102: The virtual machine management service instructs a primary virtual machine to take over a resource of the hardware layer virtual machine in which the crash event occurs.

Because the virtual machine management service may be used as a manager of the virtual machine, and is responsible for interacting with each virtual machine. Therefore, when a crash event occurs in the hardware layer virtual machine A, but a crash event does not occur in the PVM (specifically, a panic exception/problem does not occur), the virtual machine management service may send an instruction to the PVM, to instruct the PVM to take over an IO resource, an interrupt resource, a memory resource, and the like released by the hardware layer virtual machine A.

In this way, the PVM may temporarily take over the corresponding IO resource and the interrupt resource for the hardware layer virtual machine A, and the reclaimed memory resources may also be used by the PVM, to avoid the crash of the PVM due to insufficient resources.

103: The primary virtual machine takes over an IO resource, an interrupt resource, and a reclaimed memory resource of the hardware layer virtual machine in which the crash event occurs.

104: After the primary virtual machine takes over the resource of the hardware virtual machine in which the crash event occurs, the virtual machine management service coordinates a memory resource of the hardware layer virtual machine, reestablishes a mapping, invokes a kernel driver to reload an image of the hardware layer virtual machine in which the crash event occurs, and restarts the hardware layer virtual machine in which the crash event occurs.

In this way, it may be implemented that self-recovery is performed only on the hardware layer virtual machine A in which the crash event occurs. In other words, when another normal service is not affected, only the service for which the hardware layer virtual machine A is responsible is restarted.

105: After the hardware layer virtual machine in which the crash event occurs is successfully restarted, the primary virtual machine releases the IO resources and the interrupt resources of the touch driver and the display driver.

In other words, control rights of the IO resources and the interrupt resources of the touch driver and the display driver are handed back to the hardware layer virtual machine A.

106: The restarted hardware layer virtual machine reestablishes a service link and recovers a service after obtaining the IO resources and the interrupt resources of the touch driver and the display driver.

In this way, the hardware layer virtual machine A can recover a service for which the hardware layer virtual machine is responsible.

Therefore, based on the self-recovery logic, when the crash event occurs in the hardware layer virtual machine, the primary virtual machine that has not experienced the crash event and carries the operating system temporarily takes over the resource occupied by the hardware layer virtual machine, and restarts the hardware layer virtual machine separately. After the hardware layer virtual machine is restarted, the resource of the hardware layer virtual machine that is taken over by the primary virtual machine is returned to the hardware layer virtual machine. In this way, self-recovery is performed only on the hardware layer virtual machine in which the crash event occurs, and the overall restart performed on the electronic device is not triggered, thereby reducing user perception and improving user experience.

In addition, when the crash event occurs in the hardware layer virtual machine, data in the memory of the electronic device is not collected and dumped during self-recovery, thereby avoiding leakage of user data and ensuring user privacy.

In addition, the method for processing a crash event of a virtual machine provided in this embodiment of this application may be used as a platform-type solution. In other words, for a virtual machine in an SOC provided by a chip platform having such a problem, the virtual machine may be gradually iteratively inherited, and be backward compatible to a new platform.

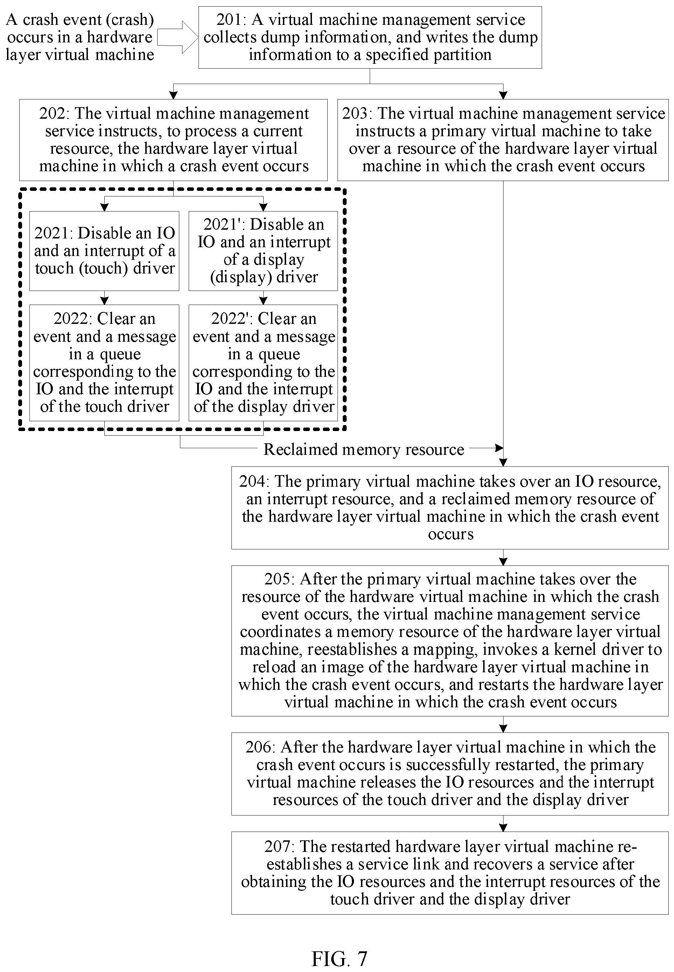

FIG. 7 is an example schematic diagram of a method for processing a crash event of a virtual machine applied to an internal test machine. The method specifically includes the following steps.

201: A virtual machine management service collects dump information, and writes the dump information to a specified partition.

It should be noted that in the field of computers, a dump is usually translated as a dump. When a program runs in an electronic device, data on a memory, a CPU, an IO, and the like is dynamic (or volatile), that is, the data is discarded after being used or an exception occurs. Therefore, in a research and development stage, to obtain data at a moment when the crash event occurs, that is, dump information in embodiments of this application, the data needs to be dumped in a static (such as a file, referred to as a dump file hereinafter) form and stored in a non-volatile storage medium such as an internal memory or an external memory/card, that is, the data is written to the specified partition in embodiments of this application. In this way, research and development personnel can position the problem based on content recorded in the dump file, to resolve the problem.

202: The virtual machine management service instructs, to process a current resource, a hardware layer virtual machine in which a crash event occurs.

An example in which drivers to be invoked include a touch driver and a display driver when a hardware layer virtual machine in which a crash event occurs processes a responsible service is used. Based on this, step 202 in this embodiment of this application is substantially the same as step 101 in the embodiment shown in FIG. 6. In other words, the hardware virtual machine in which the crash event occurs disables an IO and an interrupt of the touch driver (perform step 2021), and clears an event and a message in a queue corresponding to the IO and the interrupt of the touch driver (perform step 2022), disables an IO and an interrupt of the display driver (perform step 2021'), and clears an event and a message in a queue corresponding to the IO and the interrupt of the display driver (perform step 2022').

For specific implementation details of the foregoing steps, reference may be made to step 101 in the embodiment shown in FIG. 6, and descriptions of step 1011, step 1011', step 1012, and step 1012' included in step 101. Details are not described herein again.

Still referring to FIG. 7, in an example, after the hardware layer virtual machine in which the crash event occurs completes releasing the occupied resources, the virtual machine management service reclaims the memory resources occupied by the hardware layer virtual machine, and delivers the memory resources to the primary virtual machine for takeover.

203: The virtual machine management service instructs a primary virtual machine to take over a resource of the hardware layer virtual machine in which the crash event occurs.

204: The primary virtual machine takes over an IO resource, an interrupt resource, and a reclaimed memory resource of the hardware layer virtual machine in which the crash event occurs.

205: After the primary virtual machine takes over the resource of the hardware virtual machine in which the crash event occurs, the virtual machine management service coordinates a memory resource of the hardware layer virtual machine, reestablishes a mapping, invokes a kernel driver to reload an image of the hardware layer virtual machine in which the crash event occurs, and restarts the hardware layer virtual machine in which the crash event occurs.

206: After the hardware layer virtual machine in which the crash event occurs is successfully restarted, the primary virtual machine releases the IO resources and the interrupt resources of the touch driver and the display driver.

207: The restarted hardware layer virtual machine reestablishes a service link and recovers a service after obtaining the IO resources and the interrupt resources of the touch driver and the display driver.

It should be noted that, step 203 to step 207 in the embodiment of this application are substantially the same as step 102 to step 106 in the embodiment shown in FIG. 6. For specific implementation details, reference may be made to the description of step 102 to step 106 in the embodiment shown in FIG. 6. Details are not described herein again.

Therefore, based on the self-recovery logic, when the crash event occurs in the hardware layer virtual machine, the primary virtual machine that has not experienced the crash event and carries the operating system temporarily takes over the resource occupied by the hardware layer virtual machine, and restarts the hardware layer virtual machine separately. After the hardware layer virtual machine is restarted, the resource of the hardware layer virtual machine that is taken over by the primary virtual machine is returned to the hardware layer virtual machine. In this way, self-recovery is performed only on the hardware layer virtual machine in which the crash event occurs, and the overall restart performed on the electronic device is not triggered, thereby reducing user perception and improving user experience.

In addition, when the crash event occurs in the hardware layer virtual machine, the hardware layer virtual machine is triggered to release the resource, and the primary virtual machine takes over the resource released by the hardware layer virtual machine and the memory resource occupied by the hardware layer virtual machine, the primary virtual machine further dumps current data in the memory of the electronic device, so that a research and development personnel can quickly position a problem based on the dumped dump file at a research and development stage, to resolve the problem.

In addition, it may be understood that, to implement the foregoing functions, the electronic device includes corresponding hardware structures and/or software modules for performing the functions. Algorithm and steps in the examples described with reference to the embodiments disclosed herein may be implemented by hardware or a combination of hardware and computer software in this application. Whether a function is performed by hardware or computer software driving hardware depends on a particular application and a design constraint of the technical solutions. A person skilled in the art may use different methods to implement the described functions with reference to embodiments for each particular application, but it should not be considered that the implementation goes beyond the scope of this application.

In addition, it should be noted that, in a practical application scenario, the method for processing a crash event of a virtual machine that is provided in the foregoing embodiments implemented by the electronic device may alternatively be performed by a chip system included in the electronic device. The chip system may include a processor. The chip system may be coupled to a memory, so that the chip system invokes, when running, a computer program stored in the memory, to implement the foregoing steps performed by the electronic device. The processor in the chip system may be an application processor or a processor that is not an application processor.

In addition, an embodiment of this application further provides a computer-readable storage medium. The computer-readable storage medium stores a computer instruction. When the computer instruction is run on an electronic device, the electronic device is caused to perform the foregoing related method steps, to implement the method for processing a crash event of a virtual machine in the foregoing embodiments.

In addition, an embodiment of this application further provides a computer program product. When the computer program product is run on an electronic device, the electronic device is caused to perform the foregoing related method steps, to implement the method for processing a crash event of a virtual machine in the foregoing embodiments.

In addition, an embodiment of this application further provides a chip (or may be a component or a module). The chip may include one or more processing circuits and one or more transceiver pins. The transceiver pins and the processing circuits are in communication with each other through an internal connection path. The processing circuits perform related method steps to implement the method for processing a crash event of a virtual machine in the foregoing embodiments, to control a receiving pin to receive a signal and control a transmission pin to transmit a signal.

In addition, it may be learned from the above description that, the electronic device, the computer-readable storage medium, the computer program product, or the chip provided in embodiments of this application is configured to perform the corresponding method provided above. Therefore, for beneficial effect that can be achieved, reference is made to the beneficial effect of the corresponding method provided above. Details are not described herein again.

The above descriptions and the above embodiments are only used to describe the technical solutions of this application, but not intended to limit this application. Although this application has been described in detail with reference to the foregoing embodiments, it should be understood by a person skilled in the art that the technical solutions described in the foregoing embodiments can still be modified, or some or all of technical features can be replaced by equivalents. However, these modifications or replacements will not cause the essence of corresponding technical solutions to depart from the scope of the technical solutions in embodiments of this application.

## Claims

1. A method for processing a crash event of a virtual machine, applied to an electronic device, wherein a first virtual machine and a second virtual machine run on the electronic device, the first virtual machine is a virtual machine that carries an operating system of the electronic device, and the second virtual machine is a virtual machine oriented to a hardware layer of the electronic device; and
the method comprises:
releasing, in response to a crash event occurring in the second virtual machine, a first resource occupied by the second virtual machine, and taking over, by the first virtual machine, the first resource;
reallocating a memory resource to the second virtual machine, and restarting the second virtual machine;
releasing the first resource taken over by the first virtual machine after the second virtual machine is successfully restarted; and
reestablishing a service link between the second virtual machine and a service for which the second virtual machine is responsible after the second virtual machine obtains the first resource, and restoring a capability of processing the service.

2. The method according to claim 1, wherein the releasing a first resource occupied by the second virtual machine comprises:
disabling an input/output IO resource and an interrupt resource of a first driver, wherein the first driver is a driver to be invoked by the second virtual machine when the service is processed; and
clearing content in a queue corresponding to the IO resource and the interrupt resource.

3. The method according to claim 2, wherein the clearing content in a queue corresponding to the IO resource and the interrupt resource comprises:
clearing an event in a first input first output queue corresponding to the IO resource and the interrupt resource;
and
clearing a message in a message queue corresponding to the IO resource and the interrupt resource.

4. The method according to claim 2, wherein after the clearing content in a queue corresponding to the IO resource and the interrupt resource, the method further comprises:
reclaiming the memory resource occupied by the second virtual machine.

5. The method according to claim 4, further comprising:
taking over, by the first virtual machine, the reclaimed memory resource.

6. The method according to claim 1, wherein the reallocating a memory resource to the second virtual machine, and restarting the second virtual machine comprises:
reallocating the memory resource to the second virtual machine, and reestablishing a mapping between the second virtual machine and the memory resource;
invoking a second driver to load an image of the second virtual machine; and
restarting the operating system running on the second virtual machine.

7. The method according to any one of claims 1 to 6, wherein in response to the crash event occurring in the second virtual machine, the method further comprises:
obtaining data in the memory resource corresponding to the second virtual machine, and dumping the data to a storage medium of the electronic device.

8. The method according to any one of claims 1 to 6, further comprising:
configuring a monitor for the first virtual machine and the second virtual machine during creation of the first virtual machine and the second virtual machine;
collecting system event information of the first virtual machine and the second virtual machine through the monitor, wherein the system event information comprises an event type; and
performing the step of responding to the crash event occurring in the second virtual machine when the event type indicates that a system event currently occurring in the second virtual machine is the crash event.

9. The method according to claim 8, further comprising:
performing, when the event type indicates that a system event currently occurring in the first virtual machine is a crash event, an overall restart on the electronic device in response to the crash event occurring in the first virtual machine.

10. The method according to claim 9, wherein the performing, when the event type indicates that a system event currently occurring in the first virtual machine is a crash event, an overall restart on the electronic device in response to the crash event occurring in the first virtual machine comprises:
performing an overall restart on the electronic device in response to the crash event occurring in the first virtual machine when the crash event is a panic exception.

11. An electronic device, comprising a memory and a processor, wherein the memory is coupled to the processor, the memory stores a program instruction, and the program instruction, when executed by the processor, causes the electronic device to perform the method for processing a crash event of a virtual machine according to any one of claims 1 to 10.

12. A computer-readable storage medium, comprising a computer program, wherein the computer program, when run on an electronic device, causes the electronic device to perform the method for processing a crash event of a virtual machine according to any one of claims 1 to 10.
